Europäisches Patentamt

European Patent Office

Office européen des brevets

(19)

(11) Numéro de publication: **0 202 133 B1**

(12) **FASCICULE DE BREVET EUROPEEN**

(45) Date de publication du fascicule du brevet:
27.09.89

(51) Int. Cl.⁴: **B 26 D 7/06** // A23N15/04

(21) Numéro de dépôt: **86400700.0**

(22) Date de dépôt: **01.04.86**

(54) **Machine à ébouter.**

(30) Priorité: **05.04.85 FR 8505640**

(43) Date de publication de la demande:
**20.11.86 Bulletin 86/47**

(45) Mention de la délivrance du brevet:
**27.09.89 Bulletin 89/39**

(84) Etats contractants désignés:
**BE GB IT NL**

(56) Documents cités:
**FR-A- 2 179 562**
**FR-A- 2 474 282**
**GB-A- 1 273 972**
**US-A- 1 456 624**
**US-A- 3 738 258**

(73) Titulaire: **Laflaquière, Bruno, Les Auzerals,
F-47290 Castelnaud-de-Gratecambe (FR)**

(72) Inventeur: **Laflaquière, Bruno, Les Auzerals,
F-47290 Castelnaud-de-Gratecambe (FR)**

(74) Mandataire: **Thébault, Jean-Louis, Cabinet Thébault
S.A. 50 Cours de Verdun, F-33000 Bordeaux (FR)**

## Description

La présente invention concerne les machines à ébouter des produits tels que, par exemple, les produits agricoles comme des carottes, salsifis, etc. ... comportant des moyens de convoyage et de présentation des produits à au moins un poste de coupe disposé latéralement aux moyens de convoyage et comprenant une butée et un couteau interposé entre la butée et lesdits moyens de convoyage. Une telle machine est connue du document US-A-3 738 258.

L'ensemble des produits agricoles qui sont destinés à être mis en conserve doivent subir un certain nombre d'opérations telles que, par exemple, le nettoyage, l'épluchage, l'éboutage, etc. ...

Pour cette dernière opération, avant la mise en conserve de certains produits comme des courgettes, il est nécessaire de couper leurs deux extrémités pour éliminer ce que les techniciens dénomment couramment la fleur et les racines. Cet éboutage est d'ailleurs bien compréhensible dans la mesure où ces produits vont être ensuite découpés, traités et mis en conserve.

On connaît déjà un certain nombre de machines à ébouter qui fonctionnent de façon relativement automatique. Celles-ci, très schématiquement, sont constituées d'un chemin qui permet d'amener les légumes à un endroit déterminé. Puis, des moyens permettent de les placer sous un couteau pour que, généralement en deux étapes successives, leurs deux extrémités soient sectionnées ou éboutées. Les moyens qui permettent de déplacer longitudinalement les légumes, c'est-à-dire de les placer sous les couteaux, sont généralement constitués de poussoirs de différentes formes. On connaît, par exemple, une palette commandée par un vérin qui vient pousser le légume. On connaît aussi un poussoir constitué par un jet d'eau qui, avec l'énergie d'éjection de celle-ci, vient pousser le légume pour le faire glisser et l'amener sous la lame du couteau. Dans les deux exemples mentionnés ci-dessus, on constate à l'évidence que la technique est assez compliquée et met en œuvre un certain nombre de moyens relativement onéreux. De plus, dans le cas du jet d'eau, on arrive à obtenir des conditions de travail assez difficiles, notamment pour l'environnement. Toutes les caractéristiques rappelées ci-dessus font que les dispositifs ou les machines à ébouter n'ont pas une durée de vie importante ou présentent certaines difficultés de mise en œuvre.

Aussi, la présente invention a-t-elle pour but de réaliser une machine à ébouter des produits comme par exemple des produits agricoles – tels des courgettes – d'une réalisation simple, tout en laissant l'environnement propre et d'un prix de revient très faible.

Plus particulièrement, la présente invention a pour objet une machine à ébouter des produits, caractérisée en ce que lesdits moyens de convoyage et présentation sont constitués:

– d'un tapis plan fixe, interrompu au droit de chaque poste de coupe,

– d'un plateau disposé dans chaque zone d'interruption du tapis de façon à être de niveau avec ce dernier,

– de plaques de poussage des produits le long desdits tapis et plateau, disposées à intervalles réguliers, transversalement à l'axe du tapis, au dessus de ce dernier et entraînées en translation parallèlement audit axe et,

– au droit de chaque poste de coupe, d'un moyen pour communiquer au plateau un mouvement alternatif de translation dudit plateau dans son plan, en direction de ladite butée.

Les caractéristiques et avantages de la présente invention apparaîtront au cours de la description suivante donnée en regard des dessins annexés à titre illustratif mais nullement limitatif, dans lesquels:

– les Figures 1 et 2 représentent, sous forme schématique, respectivement dans une vue en perspective et en coupe transversale, un mode de mise en œuvre d'une machine à ébouter selon l'invention, et

– les Figures 3 et 4 représentent, suivant deux vues, respectivement de face et de dessus, une machine à ébouter les deux extrémités de produits sur deux voies différentes correspondant à deux calibres différents de produits, la machine à ébouter étant en association, par exemple, avec une calibreuse.

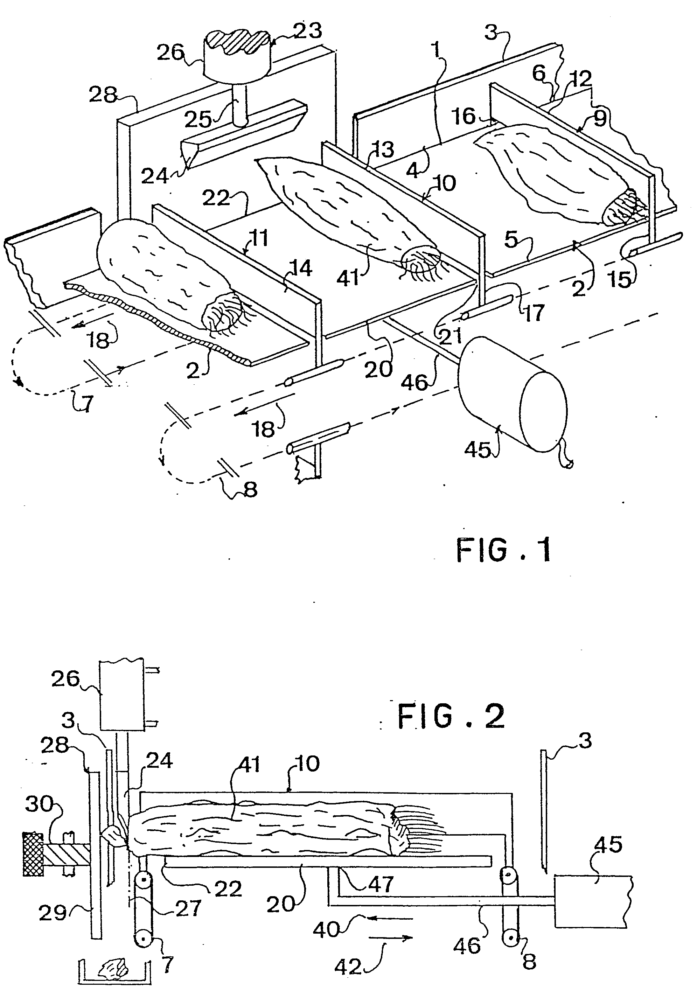

En revenant plus particulièrement aux Figures 1 et 2, celles-ci représentent dans des vues schématiques un mode de réalisation d'une machine à ébouter au moins une extrémité d'un produit comme, par exemple, un salsifis. Ces deux Figures représentant le même mode de réalisation, les mêmes références désignent les mêmes moyens.

Cette machine à ébouter comprend un chemin de guidage 1 constitué par exemple d'un tapis fixe solide ou relativement souple 2, bordé avantageusement de chaque côté par des rives 3. Ces rives 3 laissent entre les deux bords extrêmes 4 et 5 du tapis 2 un espace ouvert 6. Sous le tapis 2 sont disposées respectivement de chaque côté de ce tapis deux chaînes sans fin 7 et 8 sur lesquelles sont fixés rigidement, et à des espaces réguliers, des cavaliers 9, 10, 11. Ces cavaliers sont constitués par une plaque 12, 13, 14 aux deux extrémités de laquelle sont situés deux pieds 15, 16, 17. Chaque plaque 12, 13, 14 est avantageusement située transversalement au-dessus du tapis 2 et dans un plan sensiblement perpendiculaire à celui du tapis 2. Les pieds ont leurs extrémités fixées rigidement, respectivement à, par exemple, un maillon de chaque chaîne et à un côté de la plaque. La hauteur de ces pieds est déterminée pour que, passant par les espaces 6, la plaque soit située juste au-dessus et en travers du tapis 2, pour pouvoir constituer, comme il sera explicité ci-après, un poussoir des produits, pour les déplacer sur le tapis et les amener à un endroit déterminé quand les deux chaînes sont animées en synchronisme d'un mouvement de translation sans fin 18, de la même manière qu'une chenille que l'on trouve couramment sur les engins de travaux publics ou autres.

L'extrémité du tapis 2 débouche au même niveau qu'un plateau 20 qui constitue, malgré un espace de sécurité 21 entre lui et le tapis, un prolongement du chemin du tapis 2, le tapis continuant éventuellement après le plateau 20 pour prolonger chemin de guidage jusqu'à l'éjection finale des produits éboutés, comme il sera explicité ci-après.

La machine comporte en association avec le plateau, latéralement au chemin de guidage que forment le tapis 2, le plateau 20 et les rives 3, et en regard du bord 22 du plateau 20, des moyens de coupe 23. Ces moyens de coupe ont été schématiquement illustrés par un couteau 24 monté à l'extrémité d'une tige 25 qui, elle-même, est solidaire, par exemple, de la tige d'un vérin 26 permettant de commander la coupe par déplacement du couteau après avoir actionné, par exemple, le vérin 26. Bien entendu, ces moyens pourraient être de tout autre type, comme par exemple une scie circulaire ou analogue.

Dans la plupart de ces cas, les moyens de coupe définissent un plan dit «de coupe» référencé, notamment sur la Figure 2, en 27. Ce plan de coupe 27 est situé à une distance relativement faible du bord 22 du plateau 20, sensiblement dans le même plan de continuité de la rive 3 mentionnée précédemment. Derrière le plan ce coupe 27, est situé une butée avantageusement plane 28 constituée par une plaque 29 située derrière le couteau 24 ou son plan 27 par rapport au bord 22 du plateau 20. Cette plaque 29 peut être associée à des moyens de déplacement perpendiculaire à son plan, pour pouvoir la translater et donc régler la distance séparant la surface de butée de la plaque 29 du plan de coupe 27 défini ci-dessus. Ces moyens de déplacement ont été schématiquement illustrés par une vis 30 pouvant se translater par rapport à un écrou fixe.

La machine comprend, en outre, des moyens pour communiquer au plateau 20 un mouvement alternatif dans son plan. Ces moyens pour faire vibrer le plateau 20 peuvent être de nature quelconque et avoir une même vitesse de vibration dans les deux sens pour pouvoir déplacer le produit se trouvant sur ce plateau, comme par exemple le produit illustré 41.

Mais, pour assurer une continuité de l'ensemble tapis-plateau et faciliter l'amenée des produits et leur éjection, il est préférable que le plateau soit dans le même plan que celui du tapis 2. Pour ce faire, les moyens pour faire vibrer le plateau dans un mouvement alternatif sont conçus pour que le plateau, quand il se rapproche du couteau 24 suivant la flèche 40, Figure 2, se déplace avec une vitesse suffisante pour donner assez d'énergie au produit 41 et lui permettre de vaincre les forces de frottement au contact du plateau, l'autorisant ainsi à se déplacer d'une certaine distance vers le plan de coupe 27 ou la plaque de butée 28. Cette vitesse de vibration dans ce sens étant choisie en fonction de différents paramètres, comme le poids des produits 41 ou la surface de support du plateau 20. Par contre, quand le plateau revient dans le sens contraire, c'est-à-dire suivant la flèche 42, la vitesse doit être suffisamment faible pour ne pas donner assez d'énergie à la masse du produit 41, et pour que celui-ci reste à la même place sur le plateau, pour qu'il puisse faire un nouveau pas lorsque le sens de vibration est suivant la flèche 40, et ainsi de suite, pour se rapprocher de plus en plus de la plaque de butée 29 jusqu'à venir la toucher. Ainsi, en effectuant toute une série de vibrations comme décrites ci-dessus, même avec un plateau dans un plan horizontal, on obtient l'avance du produit 41 jusqu'à ce qu'il vienne buter contre la plaque 29.

Les moyens qui permettent d'obtenir des vibrations sont connus. Ils sont généralement constitués, par exemple, d'un moteur rotatif sur lequel est fixée une came circulaire, une bielle fixée à une de ses extrémités coopérant par une gorge longitudinale avec un ergot solidaire de la came, le moteur en pivotant permettant d'obtenir deux mouvements en sens opposé de vitesses différentes, l'une rapide et l'autre lente, ce qui donne le résultant mentionné ci-dessus.

Par contre, il existe d'autres moyens, par exemple de type électromagnétique, comme ceux schématiquement illustrés sur la Figure 2, comportant une bobine 45 pouvant être alimentée par une source d'énergie électrique, le noyau de cette bobine étant constitué d'une tige 46 dont l'extrémité 47 est fixée sous le plateau dans le but de minimiser l'encombrement et aussi pour ne pas gêner le déplacement des produits 41. Ce dernier mode de réalisation, de type électromagnétique, permet de pouvoir faire varier, avec l'intensité du courant, les différentes vitesses de vibration dans l'un ou l'autre des deux sens 40 et 42 décrits ci-dessus.

La machine telle que décrite ci-dessus et illustrée sur les Figures 1 et 2, fonctionne de la façon suivante.

On suppose que les légumes, une fois par exemple lavés et pré-traités, sont amenés successivement à une extrémité du tapis. On commande alors la translation des deux chaînes 7 et 8 d'un mouvement pas-à-pas dans le sens de déplacement 18. De ce fait, les poussoirs 9, 10, 11 se translatent en poussant devant eux, sur le tapis, dans la rainure constituée par le tapis 2 et les deux rives 3, les produits tels que 41. Quand un produit est arrivé au niveau de plateau 20 et qu'il se trouve sur celui-ci, l'avance de la chaîne est arrêtée et le vibreur est commandé de façon à ce que, comme décrit précédemment, le produit 41 avance sur le plateau 20 vers le butée 28, jusqu'à ce que l'extrémité du produit 41 tournée vers la plaque de butée 29 vienne au contact de celle-ci (comme représenté sur la Figure 2). Quand l'extrémité du produit 41 est au contact de cette plaque 29, les moyens de coupe sont commandés pour couper le produit 41 à son extrémité, à une distance déterminée entre le plan de coupe 27 et la face d'appui de la plaque de butée 29 dont la position aura été déterminée et définie par la vis 30. Cette position est généralement prédéterminée suivant la nature des produits.

Quand la coupe est effectuée, on commande à nouveau l'avance d'un pas des chaînes 7 et 8 pour que le poussoir suivant amène un nouveau produit à couper sur le plateau 20. Alors, un nouveau cycle de commandes s'effectue, en commençant par la commande de la vibration du plateau, suivie de la commande de coupe pour ébouter le produit se trouvant sur le plateau, puis de la commande de l'avance de la chaîne, d'un nouveau pas, et ainsi de suite, pas à pas, pour amener successivement les différents produits tels que 41 sur le plateau et les ébouter.

Dans le mode de fonctionnement qui vient d'être décrit, l'avance des chaînes 7 et 8 s'effectue pas à pas, mais il est bien évidemment possible de réaliser une machine dans laquelle la translation des chaînes – et donc des produits à ébouter – s'effectue en continu. Dans ce mode de réalisation, on pourra par exemple utiliser un couteau fixe sur la lame duquel les produits à ébouter seront dirigés par les poussoirs 9, 10, 11, la force obtenue par le déplacement en continu de ces derniers et appliquée sur les produits provoquant la découpe de leurs extrémités au contact du couteau. Ce mode de réalisation, plus simple que le précédent, offre l'avantage du supprimer la synchronisation des commandes de l'avance des chaînes 7 et 8, de la vibration du plateau 20 et des moyens de coupe 23.

Bien entendu, sur ces Figures 1 et 2, il n'a été décrit qu'un seul moyen de coupe pour ébouter une seule extrémité du produit, en l'occurrence l'extrémité qui comporte la fleur. Evidemment, sur la même chemin constitué par le tapis 2, peut se trouver un deuxième moyen de coupe en association avec un deuxième plateau et des moyens de butée. L'ensemble de ces moyens est monté sur l'autre côté du tapis pour pouvoir ainsi ébouter le produit à son autre extrémité et pour éliminer les racines.

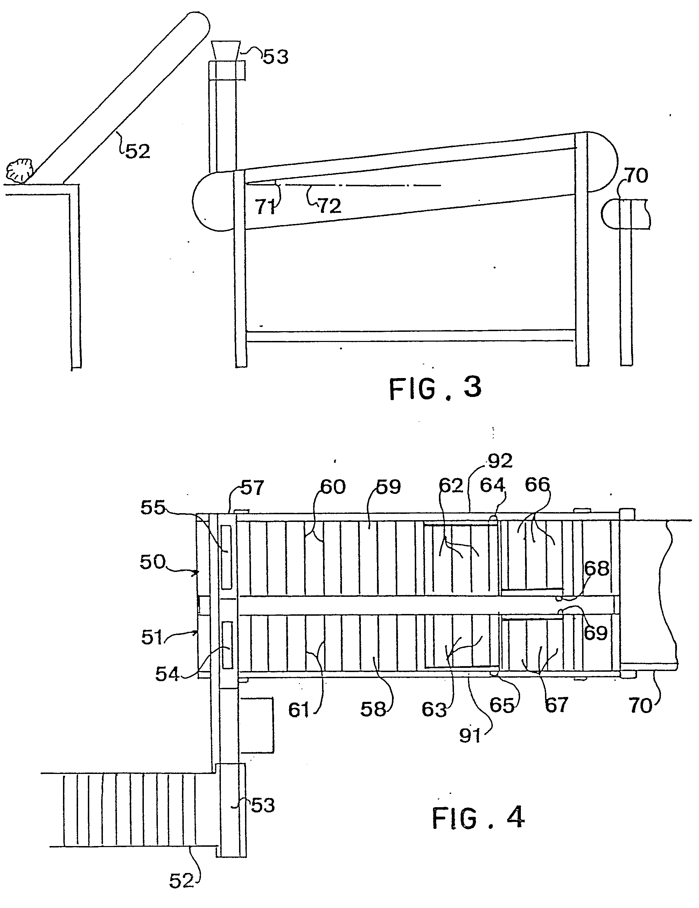

Dans les Figures 3 et 4, on a représenté, en vue respectivement de face et de dessus, un ensemble de machines à ébouter suivant deux voies séparées 50 et 51, la voie 50 correspondant à celle des produits de grand calibre, tandis que la voie 51 correspond à celle des produits de petit calibre. Pour cela, on associe à ces deux chemins un élévateur 52 qui permet d'amener les différents produits à un niveau nettement supérieur aux entrées des deux voies 50 et 51. Ces produits sont amenés au niveau de l'élévateur 52 pour tomber dans une goulotte 53 et glisser, du fait de la pente raide, de cette goulotte 53, vers, respectivement, les ouvertures d'alimentation 54 et 55, respectivement des deux voies d'éboutage 50 et 51, après avoir été triés de manière connue par une calibreuse alimentée par la goulotte 53. Ces deux ouvertures sont ainsi disposées respectivement à partir de l'entrée de la goulotte 53, en premier pour l'ouverture la plus petite 54, en second pour l'ouverture la plus grande 55, cette goulotte ayant une extrémité 57 pour éliminer les produits qui seraient de taille supérieure aux tailles précalibrées, et notamment à celle correspondant à la plus grande fenêtre 55. De ce fait, les différents produits tombent sur les tapis respectivement des deux voies d'éboutage, 50 et 51, et sont entraînés par des poussoirs 60 et 61, comme ceux décrits notamment en regard des Figures 1 et 2. Les produits, sur ces deux voies d'éboutage 50 et 51, sont alors amenés au niveau de plateaux vibrants, par exemple trois ou quatre, 62 pour la voie 50 et 63 pour la voie 51, en regard respectivement des deux couteaux 64 et 65. A ces plateaux 62 et 63 sont associés des vibreurs 91 et 92, comme ceux décrits en regard des Figures 1 et 2, ceux-ci n'ayant pas été représentés de façon complète par souci de simplification du dessin. Une fois que les produits ont été éboutés à une de leurs extrémités, respectivement par les couteaux 64 et 65, ils sont amenés sur d'autres plateaux vibrants, avantageusement du même nombre que ceux de la première coupe, plateaux 66 et 67 en regard respectivement des couteaux 68 et 69, mais situés respectivement de l'autre côté de chaque tapis, le couteau 68 par rapport au couteau 64 pour la voie 50, et le couteau 69 en opposition au couteau 65 pour la voie 51. A la sortie de chaque voie d'éboutage 50 et 51, les produits éboutés tombent sur un deuxième convoyeur 70 pour être amenés vers les étapes suivantes et être, par exemple, découpés en morceaux et mis en boîtes.

Sur la Figure 3, on représente en vue de face les deux voies superposées 50 et 51 d'éboutage où l'on voit que le plan du tapis illustré schématiquement en 71 fait, par rapport à une ligne horizontale 72, un certain angle non nul. Cet angle permet au produit de rester plaqué contre chaque poussoir du fait de son propre poids et, donc, d'être parfaitement positionné par rapport à chacun de ceux-ci. On est sûr ainsi d'amener chaque produit sensiblement au même endroit sous ou contre le couteau et dans le même plan de coupe tel que défini en regard des Figures 1 et 2.

L'ensemble tel que décrit ci-dessus permet d'apprécier les avantages d'un tel dispositif qui, en fait, ne nécessite que peu de moyens et présente surtout, par rapport à ceux de l'art entérieur rappelés précédemment, une simplicité de réalisation et un fonctionnement qui ne contribuent en aucune façon à accentuer la pollution, conservant ainsi aux produits en état de propreté garantissant à sa conserve la qualité qu'un client souhaite obtenir.

**Revendications**

1. Machine à ébouter des produits (41) comportant des moyens (2, 8, 9, 10, 11, 20) de convoyage et de présentation des produits à au moins un poste de coupe (23 à 28) disposé latéralement aux moyens de convoyage et comprenant une butée (28) et un couteau (24) interposé entre la butée et lesdits moyens de convoyage, caractérisée en ce que lesdits moyens de convoyage et présentation sont constitués:

– d'un tapis plan fixe (2), interrompu au droit de chaque poste de coupe (23 à 28),

– d'un plateau (20) disposé dans chaque zone d'interruption du tapis (2) de façon à être de niveau avec ce dernier,

– de plaques (12, 13, 14) de poussage des produits le long desdits tapis (2) et plateau (20), disposées à intervalles réguliers, transversalement à l'axe de tapis (2), au dessus de ce dernier et entraînées en translation parallèlement audit axe et,

– au droit de chaque post de coupe (23 à 28), d'un moyen (45, 46) pour communiquer au plateau (20) un mouvement alternatif de translation dudit plateau dans son plan, en direction de ladite butée (28).

2. Machine suivant la revendication 1, caractérisée en ce que le plan du tapis (2) et du ou des plateaux (20) est horizontal.

3. Machine suivant la revendication 1 ou 2, caractérisée en ce que ledit mouvement alternatif comprend un mouvement en direction de ladite butée (28) à un vitesse supérieure à celle du mouvement en sens inverse.

4. Machine suivant l'une des revendications 1 à 3, caractérisée en ce que lesdites plaques (12, 13, 14) sont entraînées en translation par deux chaînes sans fin (7, 8) situées sous le tapis (2) de chaque côté de ce dernier, lesdites chaînes étant reliées auxdites plaques (12, 13, 14) par des organes de liaison (15, 16, 17).

5. Machine suivant l'une des revendications 1 à 4, caractérisée en ce que ledit tapis (2) est muni de rives (3).


**Patentansprüche**

1. Vorrichtung zum Schopfen von Erzeugnissen (41) mit Mitteln (2, 8, 9, 10, 11, 20) zum Transportieren und Vorlegen von Erzeugnissen an mindestens ein Schneidwerk (23 bis 28), das seitlich zu den Mitteln zum Transportieren angeordnet ist und einen Anschlag (28) und ein zwischen dem Anschlag und den Mitteln zum Transportieren vorgesehenes Messer (24) umfaßt, dadurch gekennzeichnet, daß die Mittel zum Transportieren und Vorlegen gebildet werden von:

– einem feststehenden ebenen Träger (2), der geradlinig zu jedem Schneidwerk (23 bis 28) unterbrochen ist,

– einem Tisch (20), der in jeder Zone der Unterbrechung des Trägers (2) in einer Ebene mit letzterem angeordnet ist,

– Schubschilder (12, 13, 14) für die Erzeugnisse längs des Trägers (2) und Tisches (20), die in gleichmäßigen Abständen quer zur Achse des Trägers (2) oberhalb letzteren angeordnet und in Translationsbewegung parallel zur genannten Achse antreibbar sind, und

– geradlinig zu jedem Schneidwerk (23 bis 28) einem Mittel (45, 46) zum Übertragen auf den Tisch (20) eine Vor- und Rücktranslationsbewegung des Tisches in seiner Ebene in Richtung des Anschlags (28).

2. Vorrichtung nach Anspruch 1, dadurch gekennzeichnet, daß die Ebene des Trägers (2) und des oder der Tische (20) horizontal ist.

3. Vorrichtung nach Anspruch 1 oder 2, dadurch gekennzeichnet, daß die Vor- und Rückwärtsbewegung eine Bewegung in Richtung des Anschlags (28) mit höherer Geschwindigkeit als die Bewegung in entgegengesetzter Richtung umfaßt.

4. Vorrichtung nach einem der Ansprüche 1 bis 3, dadurch gekennzeichnet, daß die Schubschilder (12, 13, 14) in eine Translationsbewegung gebracht werden durch zwei Endlosketten (7, 8), die unter dem Träger (2) auf jeder Seite desselben angeordnet sind, wobei die Ketten an den Schubschildern (12, 13, 14) befestigt sind durch Verbindungsteile (15, 16, 17).

5. Vorrichtung nach einem der Ansprüche 1 bis 4, dadurch gekennzeichnet, daß der Träger (2) ausgestattet ist mit Kantenflächen (3).


**Claims**

1. Machine for cutting the ends of products (41) comprising means (2, 8, 9, 10, 11, 20) for conveying and presenting the products to at least one cutting position (23 to 28) disposed at the side of the conveying means and comprising a limit stop (28) and a knife (24) which is inserted between the limit stop and the said conveying means characterised in that the said conveying and presenting means comprise:

– a fixed flat belt (2) interrupted at right angles to each cutting position (23 to 28),

– a platform (20) disposed in each area where the belt (2) is interrupted in such a way that it is level with the latter,

– plates (12, 13, 14) for pushing the products along the belt (2) and the platform (20), disposed at regular intervals at right angles to the axis of the belt (2), and above this, which are moved along in a direction parallel to the said axis, and

– at right angles to each cutting position (23 to 28) a means (45, 46) for imparting to the platform (20) an alternating movement of translation of the said platform in its plane, in the direction of the said limit stop (28).

2. Machine as claimed in claim 1, characterised in that the plane of the belt (2) and the plate(s) (20) is horizontal.

3. Machine as claimed in claim 1 or 2, characterised in that the said alternating movement comprises a movement in the direction of the said limit stop (28) at a speed exeeding that of the movement in the opposite direction.

4. Machine as claimed in any one of claims 1 to 3, characterised in that the said plates (12, 13, 14) are moved in translation by two continuous chains (7, 8) situated below and on each side of the belt (2), the said chains being connected to the said plates (12, 13, 14) by linking components (15, 16, 17).

5. Machine as claimed in any one of claims 1 to 4, characterised in that the said belt (2) is equipped with sides (3).

FIG . 1

FIG . 2

FIG . 3

FIG . 4